# EUROPEAN PATENT APPLICATION

(11) **EP 1 826 189 A2**
(43) Date of publication of application: **29.08.2007**
(21) Application number: 07102691.8
(22) Date of filing: 20.02.2007
(51) Int. Cl.: C04B 28/02, C04B 18/10

(54) **Cement mix for making supporting and delimiting elements, such as piles or suchlike, for the building trade, agriculture and naval constructions, and supporting and delimiting element made using said cement mix**

(30) Priority: 22.02.2006 IT UD20060039
(71) Applicant: Valente Pali Precompressi SpA, 35011 Campodarsego, PD (IT)
(72) Inventor: Valente, Alberto, 35010 Borgoricco (PD) (IT)
(74) Representative: Petraz, Gilberto Luigi

(57) **Abstract**

Cement mix for making supporting and delimiting elements for the building trade, agriculture and naval constructions, such as piles for enclosures, piers, platforms, supports for plants or suchlike, comprising at least a hydraulic binder, inert materials, sand and water. The inert materials at least partly consist of grains of light agglomerate material obtained with ash, cement and water.

## Description

### FIELD OF THE INVENTION

The present invention concerns a cement mix suitable to be used to make supporting and delimiting elements, in particular, but not only, piles made of pre-compressed reinforced concrete, to be used in the building trade, for example as components in enclosures, or in agriculture, for example to support vines or fruit plants, or in the naval construction industry for making platforms, moorings, wharves or piers.

### BACKGROUND OF THE INVENTION

Supporting and fencing elements are known, such as for example piles of pre-compressed reinforced concrete, used for various purposes in the building trade, in agriculture, and/or yachting.

Such supporting and fencing elements are made using a cement mix, generally concrete, and a metal reinforcement consisting of one or more harmonic steel meshes.

Supporting and fencing elements thus made have a considerable specific weight, however, and may therefore cause difficulties in transport and handling steps, with the consequent need to use specific equipment which entail an increase in the costs of production and installation.

To attempt to obviate this disadvantage, it has been proposed to use lightened concrete, for example produced with the use of expanded clay; this solution, however, has shown itself to be not very suitable in determinate situations of use, especially when, as in the case of piles for building or agriculture, the supporting and delimiting elements are used in direct contact with atmospheric agents, without any covering.

Moreover, the ultimate tensile strength of such supporting and delimiting elements is inadequate for determinate uses.

Purpose of the present invention is to produce a cement mix, to be used for making supporting and delimiting elements for the building trade and agriculture, in particular for making piles of pre-compressed reinforced concrete, which is lighter than traditional concrete, but which has characteristics of mechanical resistance and resistance to atmospheric agents which make it suitable substantially for any use.

Another purpose of the present invention is to achieve a cement mix of the above type easily and with limited costs.

The Applicant has devised and embodied the present invention to overcome the shortcomings of the state of the art in order to achieve said purposes and to obtain other advantages.

### SUMMARY OF THE INVENTION

The present invention is set forth and characterized essentially in the main claims, while the dependent claims describe other innovative characteristics of the invention.

The cement mix according to the present invention, usable for making supporting and delimiting elements for the building trade, agriculture and naval constructions, such as piles for enclosures, to support plants or for piers, consists of a mixture comprising at least a hydraulic binder, sand, water, and inert materials, comprising a light agglomerate material based on ash, cement and water. In the present text the term "light", referred to the agglomerate material, means a material having a specific weight lower than 1.000 kg/m³, advantageously comprised between about 850 kg/m³ and about 950 kg/m³.

Advantageously, said light agglomerate material is in grains.

Moreover, advantageously, the ash of the light agglomerate material derives partly or entirely from wood.

According to a variant, the cement mix also comprises one or more chemical additives, for example fluidizing, aerating, waterproofing or suchlike, able to confer determinate physical or chemical properties on the mix and hence to the supporting and delimiting elements made thereof.

The use of the grains of light inert material, instead of the gravel normally used for the production of concrete, allows to obtain a cement mix with a specific weight lower than concrete, but with a good resistance to mechanical stresses and atmospheric agents.

The cement mix according to the present invention is therefore particularly indicated for the production of piles made of pre-compressed reinforced concrete, to be used in the building trade, agriculture or naval constructions, which must advantageously be light so as to be easily transported and handled, but also resistant and long-lasting in consideration of the places and ways they are used.

### DETAILED DESCRIPTION OF A PREFERENTIAL FORM OF EMBODIMENT

The cement mix according to the present invention is obtained by mixing together, in variable proportions, sand, cement, water and inert materials of the light type consisting, for example, of grains of agglomerate material.

The cement mix can also comprise one or more chemical additives, for example fluidizing, aerating, waterproofing or suchlike, able to confer determinate physical or chemical properties to the mix, according to the intended use of the supporting and delimiting elements to be made.

The grains used in the cement mix according to the invention are obtained by the agglomeration of a mixture of ash, cement and water and have characteristics of considerable lightness, with a specific weight of about 850 kg/m³ - 950 kg/m³, and great hardness and resistance to compression (up to 8 N/mm²).

Advantageously, the ash used is completely or almost completely ash deriving from wood.

The grains have a substantially ovoid shape, a spherical shape, or an irregular shape, of variable size, advantageously between some tenths of a millimeter and about 22 mm, and have a porosity that can reach 16%.

They also have characteristics of low water absorbance (equal to or less than 5%) and high resistance to frost and other atmospheric agents and are therefore suitable to replace the gravel normally used in the production of concrete.

In a possible form of embodiment, the grains are of the type known commercially by the name of "Kand® Stone".

In a preferential form of embodiment, the cement mix consists of: inert materials of grains of the above type, in a quantity comprised between 10% and 60%, sand, in a quantity comprised between 10% and 50%, cement, in a quantity comprised between 5% and 50%, additives, in a quantity comprised between 0.1% and 10%, and water, in a quantity comprised between 5% and 30%.

The cement mix according to the present invention has a specific weight, in the solid state, comprised between 1,400 kg/m³ and 2,000 kg/m³, advantageously between about 1,500 kg/m³ and about 1,600 kg/m³, compared with that of traditional concrete that is between about 2,400 kg/m³ and about 2,500 kg/m³, but has a resistance to compression that can even reach 80 N/mm².

This allows to obtain supporting and delimiting elements that are considerably lighter, and hence able to be transported and installed more easily and with lower costs than traditional ones, but with a mechanical resistance such as to make them suitable for various uses in the building trade, agriculture and naval constructions.

The use of grains of agglomerate material with the characteristics described above also confers on the supporting and delimiting elements according to the invention a great resistance to atmospheric agents and hence makes them suitable to be used in the crude state, without needing coverings or surface finishing.

For this reason, the cement mix according to the present invention is particularly suitable to be used, instead of traditional concrete, for making piles of pre-compressed reinforced concrete to be used in enclosures or for supporting plants such as vines or suchlike, or again for making nautical piers or platforms, since the piles must be light and easily handled for installation, but must all the same guarantee a determinate resistance to mechanical stresses.

It is clear, however, that modifications and/or additions of components may be made to the cement mix as described heretofore, and the supporting and delimiting elements made therewith, without departing from the field and scope of the present invention.

For example, a further plastic component can be added to the cement mix to reduce the overall specific weight of the cement mix. Such a further plastic component can be, for example, polyethyltereftalate (PET) derived from recycled wastes, and can be added to the other components of the cement mix in order to represent a percentage variable from zero to about 50% of the overall volume, or weight, of the cement mix.

Moreover, the cement mix can be pigmented with coloring substances in order to camouflage the supporting and delimiting elements and hence obtain a reduction of the environmental impact where they are installed, or to render the supporting and delimiting elements more distinguishable in determinate uses where a greater visibility is required.

It is also clear that, although the present invention has been described with reference to specific examples, a person of skill in the art shall certainly be able to achieve many other equivalent forms of cement mix and relative supporting and delimiting elements, having the characteristics as set forth in the claims and hence all coming within the field of protection defined thereby.

## Claims

1. Cement mix for making supporting and delimiting elements for the building trade, agriculture and naval constructions, such as piles for enclosures, piers, platforms, supports for plants or suchlike, comprising at least a hydraulic binder, inert materials, sand and water, **characterized in that** said inert materials at least partly consist of a light agglomerate material obtained with ash, cement and water.

2. Cement mix as in claim 1, **characterized in that** said light agglomerate material is in grains.

3. Cement mix as in claim 1 or 2, **characterized in that** said ash derives at least partly from wood.

4. Cement mix as in claim 2 or 3, **characterized in that** said grains have a substantially spherical shape, an ovoid shape, or an irregular shape.

5. Cement mix as in any claim hereinbefore, **characterized in that** said grains have a size variable from some tenths of a millimeter to about 22 mm.

6. Cement mix as in any claim hereinbefore, **characterized in that** said grains have a variable porosity up to 16%.

7. Cement mix as in any claim hereinbefore, **characterized in that** said grains have water absorption capacity equal to or less than 5%.

8. Cement mix as in any claim hereinbefore, **characterized in that** said grains have a specific weight comprised between 800 kg/m³ and 1.000 kg/m³.

9. Cement mix as in any claim hereinbefore, **characterized in that** it also comprises one or more chemical additives able to confer determinate physical or chemical properties to the mix.

10. Cement mix as in claim 9, **characterized in that** said additives comprise at least a coloring substance.

11. Cement mix as in claim 9 or 10, **characterized in that** said grains of light agglomerate material are present to a quantity comprised between 10% and 60%, said sand is present to a quantity comprised between 10% and 50%, said hydraulic binder is present to a quantity comprised between 5% and 50%, said additives are present to a quantity comprised between 0.1% and 10%, and said water is present to a quantity comprised between 5% and 30%.

12. Cement mix as in any claim hereinbefore, **characterized in that**, in the solid state, it has a specific weight comprised between 1,400 kg/m³ and 2,000 kg/m³.

13. Cement mix as in any claim hereinbefore, **characterized in that** a further plastic component is added to the cement mix to reduce the overall specific weight thereof.

14. Supporting and delimiting element for the building trade, agriculture or naval constructions, such as a pile for enclosures, supports for plants, for making platforms, piers, or suchlike, **characterized in that** it is made with a cement mix comprising a hydraulic binder, sand, water and inert materials at least partly consisting of grains of light agglomerate material based on ash, cement and water.
